# EUROPÄISCHE PATENTANMELDUNG

(11) **EP 2 495 850 A2**
(43) Veröffentlichungstag der Anmeldung: **05.09.2012**
(21) Anmeldenummer: 12154742.6
(22) Anmeldetag: 09.02.2012
(51) Int. Cl.: H02K 11/00

(54) **Verbindungselement zwischen Motor und Steuereinheit**

(30) Priorität: 01.03.2011 DE 102011004919
(71) Anmelder: Robert Bosch GmbH, 70442 Stuttgart (DE)
(72) Erfinder: Hennecke, Thomas, 70771 Leinfelden (DE); Skuppin, Andre, 74343 Sachsenheim (DE); Urban, Stephan, 73275 Ohmden (DE)

(57) **Zusammenfassung**

Die vorliegende Erfindung beschreibt ein Verbindungselement, das dazu geeignet ist, bei einer Schnittstelle zwischen Motor und Steuereinheit einen entsprechenden Schutz gegenüber ungewollter Medienausbreitung zu realisieren. Das Verbindingungselement weist eine Grundplatte mit einem Schaft um eine Öffnung auf, wobei eine erste Dichtung am Rand der Grundplatte und eine zweite Dichtung am oberen Rand des Schafts vorgesehen ist.

## Beschreibung

Die Erfindung betrifft ein Verbindungselement, welches zwischen einem Motor und einer Steuereinheit eingesetzt werden kann, sowie eine Baueinheit bestehend aus dem Motor, dem Verbindungselement und der Steuereinheit.

### Stand der Technik

Bei der Entwicklung von Motoren stellt die Baugröße neben der zu erwartenden Leistungsabgabe eine wesentliche Eigenschaft dar. Zur Realisierung möglichst kleiner Elektromotoren hat es sich als vorteilhaft erwiesen, die mechanischen und elektronischen Komponenten wenigstens teilweise baulich zu trennen. Um jedoch eine Gesamtheit der Baueinheit Motor und Steuereinheit zu erreichen, ist es notwendig, geeignete Verbindungselemente zu entwickeln, die einen Zusammenschluss dieser beiden Elemente ermöglichen.

Aus der DE 10 2006 026 403 A1 ist ein Schaltungsträger bekannt, auf dem eine Ansteuerelektronik für einen Elektromotor aufgebracht ist. Zur Aufnahme eines Lagers des Elektromotors weist der Schaltungsträger im Zentrum eine tiefgezogene Aufnahme auf. Zusammen mit einem Deckel über dem Schaltungsträger bildet dieser Aufbau ein Lagerschild des Elektromotors, der das Gehäuse des Elektromotors nach einer Seite hin abschließt.

Eine weiterer Aufbau eines Elektromotors mit zugeordneter Elektronik ist in der DE 10 2008 054 527 A1 beschrieben. Bei diesem Aufbau wird die Verbindung zwischen dem Motorgehäuse und der die Elektronik enthaltende Lagerplatte mittels Verschweißens oder Aufschrumpfens erreicht.

### Offenbarung der Erfindung

Bei der Verwendung von Elektromotoren für die unterschiedlichsten Anwendungen sind verschiedene Anforderungen zu erfüllen. Neben thermischen und schwingenden Belastungen ist auch eine hohe Medienbeständigkeit zu beachten. So ist bei einem entsprechenden Einsatz der Elektromotoren, beispielsweise als Lenkmotor in einem Lenksystem, darauf zu achten, dass die mechanischen und elektronischen Komponenten durch geeignete Maßnahmen (Feststoff- und/oder Flüssigkeitsdichtung) geschützt werden. Besonders bei den Schnittstellen zwischen diesen Komponenten ist darauf zu achten, dass die erforderlichen Schutzklassenanforderungen eingehalten werden.

Die vorliegende Erfindung beschreibt ein Verbindungselement, das dazu geeignet ist, an einer derartigen Schnittstelle einen entsprechenden Schutz gegenüber ungewolltem Medieneintritt bzw. -ausbreitung zu realisieren, um die gewünschten Dichtheitsanforderungen zu erfüllen.

Dies wird dadurch erreicht, dass das Verbindungselement, welches zwischen Motor und Steuereinheit vorgesehen ist, wenigstens zwei Dichtungen aufweist, um effizient die möglichen Medienströme zu behindern. Dabei weist das Verbindungselement eine ebene Grundplatte auf, in der elektrische Durchführungen und ein um eine Öffnung herum angeordneter Schaft vorgesehen sind. Während die elektrischen Durchführungen zur Ansteuerung des Elektromotors verwendet werden, ist die Öffnung zur Durchführung des auf den Läufer aufgebrachten Lagesensors notwendig. Um die erforderliche Abdichtung zu erreichen ist daher eine erste Dichtung vorgesehen, die am Rand der Grundplatte angeordnet ist, während eine zweite Dichtung am oberen Rand des Schafts angebracht ist.

Durch die Positionierung des Verbindungselements in einem oberen versenkten Bereich des Motors mit nachfolgender Montage der Steuereinheit auf dem kann durch diese Dichtungen eine einfache und effiziente Abdichtung erreicht werden. Mit diesen Abdichtung wird eine Barriere erzeugt, die es einer Flüssigkeit erschweren oder unmöglich machen, über den Motor in die Steuereinheit zu gelangen.

Besonders vorteilhaft ist eine weitere Ausgestaltung der Erfindung, bei der nicht nur der äußere Bereich um die Grundplatte sowie die Öffnung abgedichtet wird sondern auch die elektrischen Durchführungen. Hierzu wird die Grundplatte als SKV Adapterplatte verwendet, d.h. als Grundplatte mit Schneid-Klemm- und Schweißverbindungen. Dabei wird optional eine dritte Dichtung verwendet, die speziell im Bereich der elektrischen Durchführungen angeordnet sind. Eine Möglichkeit für diese Dichtung stellt die Verwendung von Formdichtungen dar, beispielsweise als Einpressdichtungen. Diese Formdichtungen können in die Durchführungslöcher eingebracht werden und flexibel ausgestaltet sein, so dass die elektrischen Kontaktierungen von der Ober- und Unterseite der Grundplatte eingeführt werden können. Alternativ können die Einpressdichtungen jedoch auch zusammen mit einer der elektrischen Kontakte von der Ober- oder Unterseite eingebracht und dann fixiert werden. Der elektrische Kontakt findet dann vom Elektromotor zur Grundplatte als Schweiß- oder als Klemmkontakt und von der Grundplatte zur Steuereinheit als Schneid-Klemmkontakt statt.

In einer Weiterbildung der Erfindung ragt die dritte Dichtung über die Grundplatte hinaus. Dabei kann vorgesehen sein, dass wenigstens auf einer Seite der Grundplatte eine Einfassung der Dichtung erfolgt. Durch eine derartige Ausgestaltung kann gesichert werden, dass eine ausreichende Materialmenge in die Durchgangsöffnung eingebracht wird, um die gewünschte Dichtwirkung zu erreichen.

Besonders vorteilhaft ist es, wenn die Grundplatte in runder oder zumindest ovaler Form ausgestaltet ist. Optional kann der Rand der Grundplatte auch als Wulst ausgeformt sein. Demgegenüber ist es auch von Vorteil, wenn der Schaft ebenfalls rund ausgestaltet ist.

Für die Dichtungen bei runden oder ovalen Formen bietet sich die Verwendung von O-Ringen an. Diese können direkt auf die Randbereiche der Grundplatte bzw. des Schafts gelegt werden. Es kann jedoch auch vorgesehen sein, dass Aufnahmen, beispielsweise in Form von Wülsten oder Vertiefungen vorgesehen sind, die ein Verrutschen der O-Ringe bei der Montage verhindern.

Insgesamt stellen die erfindungsgemäßen statischen Dichtungen gegenüber dynamischen Dichtungen eine robustere Alternative dar. Darüber hinaus werden gegenüber dynamischen Dichtungen evtl. auftretende Drehmomentverluste vermieden.

Weitere Vorteile ergeben sich aus der nachfolgenden Beschreibung von Ausführungsbeispielen bzw. aus den abhängigen Patentansprüchen.

### Kurze Beschreibung der Zeichnungen

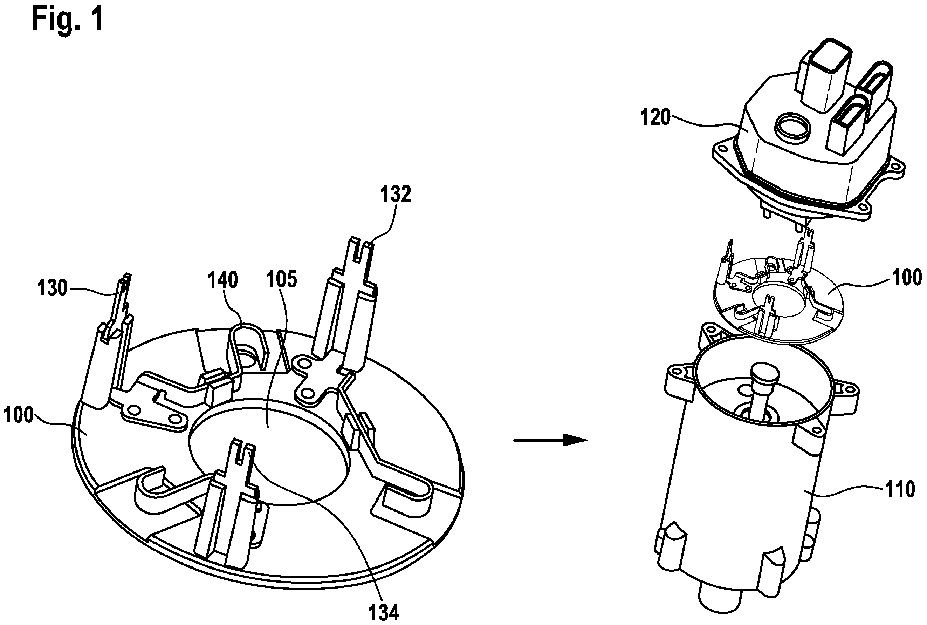

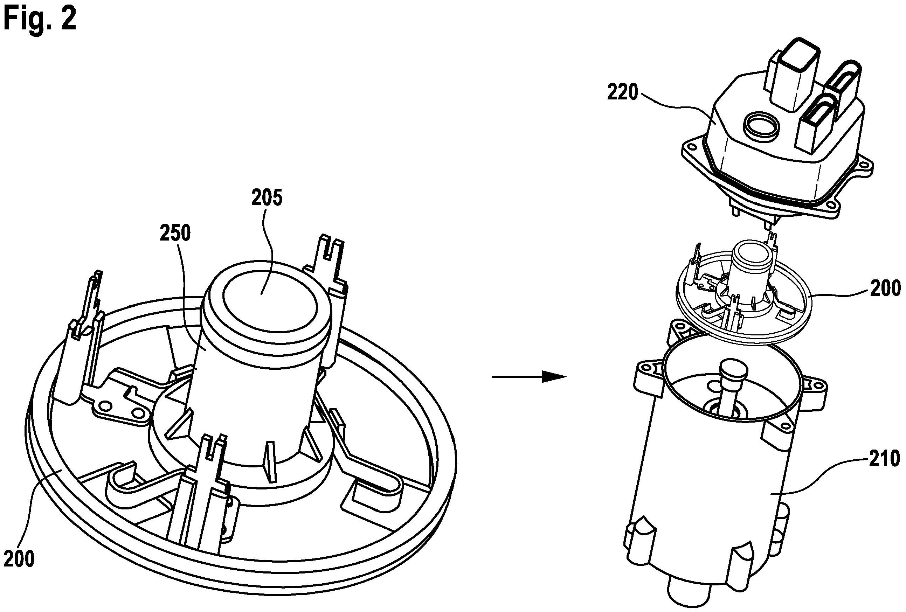

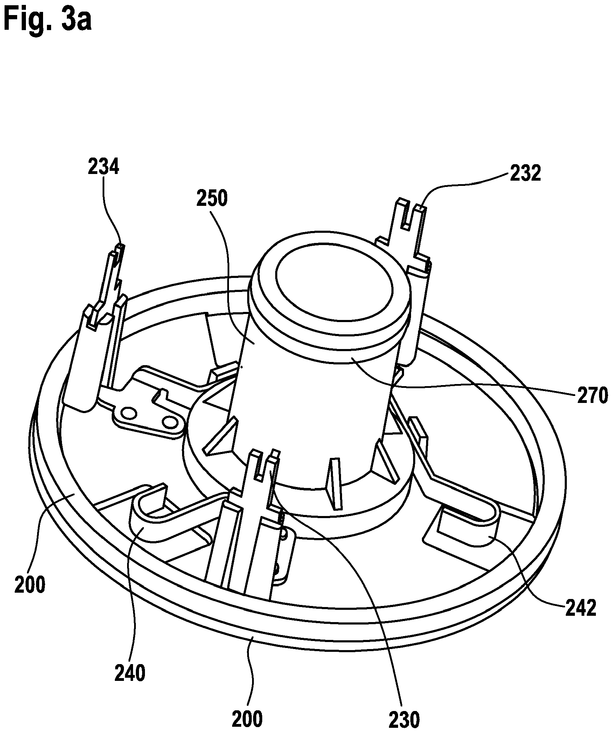

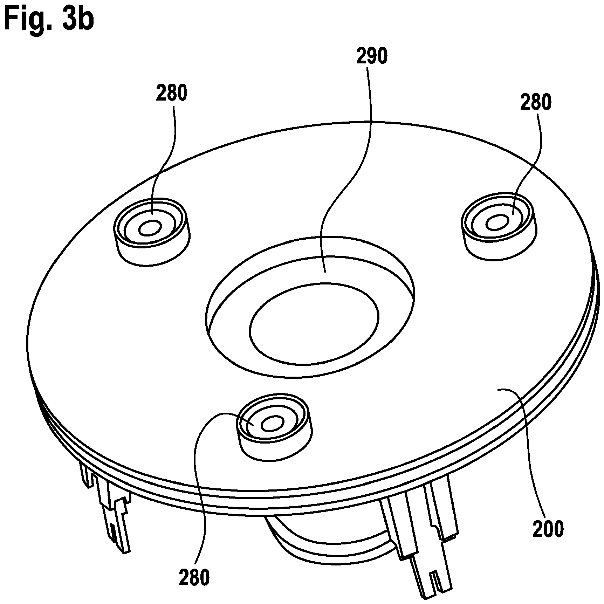

Figur 1 zeigt den gängigen Zusammenbau einer Baueinheit bestehend aus Motor, Verbindungselement und Steuereinheit. Demgegenüber wird in der Figur 2 der Zusammenbau mit dem erfindungsgemäßen Verbindungselement gezeigt. Eine detaillierte Darstellung des Verbindungselements zeigen die Figuren 3a und 3b.

### Ausführungsformen der Erfindung

Durch die Aufspaltung der mechanischen Elektromotor- und elektronischen Steuerkomponenten in unterschiedliche Bauelemente ist die Notwendigkeit entstanden, bei der Zusammensetzung dieser Komponenten geeignete Verbindungselemente zur Verfügung zu stellen.

In der Figur 1 ist beispielhaft ein möglicher Aufbau einer Baueinheit gemäß dem Stand der Technik, bestehend aus Elektromotor 110 und Steuereinheit 120 dargestellt, bei dem die Steuereinheit wenigstens teilweise in den oberen Bereich des Elektromotors eingelassen und mit diesem verschraubt wird. Für den internen Zusammenbau wird eine Grundplatte 100 verwendet, die beispielsweise für einen dreiphasigen Elektromotor drei Kontaktelemente 130 bis 134 aufweist. Durch entsprechende Löcher 140 in der Grundplatte können elektrische Kontaktierungen zwischen der Steuereinheit 120 und dem Elektromotor 110 hergestellt werden. Mittig in der Grundplatte 100 ist eine Öffnung 105 vorgesehen, durch die der Läufer mit dem darauf positionierten Lagesensor hindurchgeführt wird. Dieser Läufer als Teil der Welle des Elektromotors dient zusammen mit dem Lagesensor, der selbstverständlich auch in der Steuereinheit 120 positioniert sein kann, dazu, die Position des Rotors festzustellen, um den Anlauf des Motor mittels der Ansteuerung über die drei Phasen optimal zu steuern.

Wie aus der Figur 1 somit ersichtlich ist, existieren zwischen dem Elektromotor 110 und der Steuereinheit 120 verschiedene Möglichkeiten (Randbereich der Grundplatte, zentrale Öffnung und Durchgangsöffnung der Kontaktierung), durch die eingetretene Flüssigkeit vom Motor entlang der Welle zu den Anschlüssen der Steuereinheit 120 gelangen kann.

Um diese Stellen des möglichen Mediendurchgangs zu schließen, werden Dichtungen gemäß der Figuren 2 bzw. 3a und 3b vorgestellt. Zunächst fällt an der Figur 2 auf, dass im Wesentlichen keine Änderungen am Elektromotor 210 bzw. an der Steuereinheit 220 vorgenommen werden müssen. Lediglich an der verwendeten Grundplatte 200, die als SKV-Adapterplatte ausgestaltet ist, finden sich gravierende Änderungen.

Im Randbereich der Grundplatte 200 ist eine erste Dichtung 260 in Form eines O-Rings angebracht. Optional kann zur besseren Führung ein Wulst vorgesehen sein, in den der O-Ring eingelassen ist. Durch diesen O-Ring wird die seitliche Dichtung im versenkten Bereich zwischen Grundplatte 200 und Gehäuse des Elektromotors 210 erreicht. Weiterhin wird die zentrale Öffnung 205 gegenüber der Version gemäß der Figur 1 mit einem Schaft 250 versehen. Dieser Schaft dient dazu, die zweite Dichtung 270, die diese Öffnung 205 abdichten soll, in eine gegenüber der Grundplatte 200 erhöhten Ebene anzuordnen, um eine Dichtung zwischen Grundplatte und Steuereinheit zu ermöglichen. Hierzu wird ebenfalls ein O-Ring im oberen Bereich des Schafts 250 angeordnet. Dabei kann die zweite Dichtung 270 sowohl im Inneren des Schafts 250 als auch außerhalb vorgesehen sein. Eine äußere Anbringung der zweiten Dichtung 270 hat rein praktische Vorteile, da durch eine entsprechende Ausformung der Unterseite der Steuereinheit 220 eine einfache kraftschlüssige Pressung der zweiten Dichtung 270 bzw. des O-Rings erreicht werden kann.

Die dritte mögliche Dichtung 280 betrifft die Durchkontaktierung, die für die elektrische Verbindung zwischen dem Elektromotor 210 und der Steuereinheit 220 notwendig ist. Hierfür sind auf der Grundplatte 200 gemäß dem vorliegenden Ausführungsbeispiel drei Kontaktelemente 230 bis 234 angebracht, für jede (Ansteuerungs-) Phase eines, die eine Schweißverbindung zum Elektromotor und eine Schneid-Klemmverbindung zur Steuereinheit 220 herstellen. Zur Durchführung der elektrischen Verbindungen durch die Grundplatte 200 sind Öffnungen 240 und 242 (die Öffnung für das Kontaktelement 234 ist verdeckt) vorgesehen, die mittels der dritten Dichtung 280 verschlossen sind. Auf der Unterseite der Grundplatte 200 gemäß der Figur 3b kann man die abgedichteten Durchführungen gut erkennen. Diese dritten Dichtungen sind so ausgestaltet, dass eine abgedichtete elektrische Verbindung vom Elektromotor zu den Kontaktelementen 230 bis 234 auf der anderen Seite hergestellt werden kann.

Als dritte Dichtungen 280 eignen sich Formdichtungen, die in die Öffnungen eingesetzt oder hineingepresst werden. Dabei kann vorgesehen sein, dass die Dichtungen flexibel ausgestaltet sind und sich an die Form der Kontaktelemente 230 bis 234 der Vorderseite und/oder an die entsprechenden Kontaktstifte des Elektromotors anpassen können. Alternativ kann aber auch vorgesehen sein, dass die dritten Dichtungen 280 zusammen mit den Kontaktelementen 230 bis 234 von der Vorderseite eingebracht und dann ausgehärtet werden. Dabei ist darauf zu achten, dass von der Rückseite eine Kontaktierung mit den Kontaktelementen der Vorderseite möglich ist, ohne die Dichtung zu verletzten. Optional können die dritten Dichtungen auch als O-Ringe ausgelegt sein.

In der Figur 3b ist weiterhin zu sehen, dass die dritten Dichtungen 280 mit einem Kragen versehen sind. Dieser Kragen dient einerseits dazu, ggf. überschüssiges Dichtungsmaterial aufzunehmen bzw. sicherzustellen, dass genügend Dichtungsmaterial in die Durchgangsöffnungen eingebracht werden kann. Andererseits dient dieser Kragen dazu, auch die elektrischen Kontaktierungen gegenüber einem Feuchtigkeits- oder Flüssigkeiteintritt zwischen Verbindungselement 200 und Motor 210 zu schützen.

In einem weiteren Ausführungsbeispiel kann eine vierte Dichtung 290 vorgesehen sein, die in die Vertiefung am Fuße des Schafts 250 auf der Rückseite der Grundplatte 200 eingelassen ist. Durch das Aufsetzen dieser vierten Dichtung der Grundplatte auf den Boden des versenkten Bereichs des Motors 210 kann zusätzlich oder alternativ eine Dichtung der Kontaktierung zur Welle bzw. zum Läufer erreicht werden.

## Patentansprüche

1. Verbindungselement zwischen einem Motor (110) und einer Steuereinheit (120), wobei
- das Verbindungselement (100) eine ebene Grundplatte und
- die Grundplatte elektrische Durchführungen (240, 242) und eine insbesondere zentrierte Öffnung (205)
aufweist,
wobei die Grundplatte einen Schaft (250) um die Öffnung (205) aufweist, **dadurch gekennzeichnet dass**
eine erste Dichtung (260) am Rand der Grundplatte und eine zweite Dichtung (270) am oberen Rand des Schafts (250) vorgesehen ist.

2. Verbindungselement nach Anspruch 1, **dadurch gekennzeichnet dass** die elektrischen Durchführungen eine dritte Dichtung (280) aufweisen, wobei als dritte Dichtungen insbesondere Einpressdichtungen vorgesehen sind.

3. Verbindungselement nach Anspruch 2, **dadurch gekennzeichnet dass** die dritte Dichtung (280) wenigstens teilweise über die Grundplatte hinausragt.

4. Verbindungselement nach einem der vorhergehenden Ansprüche, **dadurch gekennzeichnet dass** die Grundplatte eine runde Form aufweist, wobei als erste Dichtung (260) insbesondere ein O-Ring vorgesehen ist.

5. Verbindungselement nach einem der vorhergehenden Ansprüche, **dadurch gekennzeichnet dass** die Grundplatte einen Wulst mit Vertiefung im Randbereich aufweist, in den die erste Dichtung (260) eingesetzt ist.

6. Verbindungselement nach einem der vorhergehenden Ansprüche, **dadurch gekennzeichnet dass** der Schaft (250) eine runde Form hat, wobei als zweite Dichtung (270) insbesondere ein O-Ring vorgesehen ist.

7. Verbindungselement nach Anspruch 6, **dadurch gekennzeichnet dass** die zweite Dichtung (270) im Außenbereich des Schafts (250) angeordnet ist.

8. Baueinheit bestehend aus einem Motor (110), einem Verbindungselement (200) gemäß der Ansprüche 1 bis 7 sowie einer Steuereinheit (120), wobei der Motor (110) einen oberen versenkten Bereich zur Aufnahme des Verbindungselements (200) und der Steuereinheit (120) aufweist, wobei das in dem versenkten Bereich eingebrachte Verbindungselement
- eine ebene Grundplatte und
- elektrische Durchführungen (240, 242) und
- eine insbesondere zentrierte Öffnung (205)
aufweist,
wobei die Grundplatte einen Schaft (250) um die Öffnung (205) aufweist, **dadurch gekennzeichnet dass**
eine erste Dichtung am Rand der Grundplatte und eine zweite Dichtung am oberen Rand des Schafts vorgesehen ist.

9. Baueinheit nach Anspruch 8, **dadurch gekennzeichnet dass** die elektrischen Durchführungen jeweils getrennte elektrische Verbindungen zwischen der Steuereinheit (120) und dem Motor (110) herstellen.

10. Baueinheit nach Anspruch 8 oder 9, **dadurch gekennzeichnet dass** die Dichtungen einen Flüssigkeitsaustausch zwischen dem oberen Bereich im Motor (110) und der Steuereinheit (120) verhindern.

11. Verwendung einer Baueinheit nach einem der Ansprüche 7 bis 10 in einem elektrischen Lenksystem, wobei der Motor zum Antrieb des Lenkgetriebes dient.
